# EUROPÄISCHE PATENTSCHRIFT

(11) **EP 2 423 015 B1**
(45) Veröffentlichungstag und Bekanntmachung des Hinweises auf die Patenterteilung: **04.01.2017**
(21) Anmeldenummer: 11005098.6
(22) Anmeldetag: 22.06.2011
(51) Int. Cl.: B60H 1/00, F16F 15/08

(54) **Vorrichtung zur schwingungsdämpfenden Lagerung eines Aggregates**
Device for supporting a machine in a vibration isolating way
Dispositif pour supporter un agrégat de façon à minimiser les vibrations

(30) Priorität: 27.08.2010 DE 102010035682; 17.09.2010 DE 102010045781
(43) Veröffentlichungstag der Anmeldung: 29.02.2012
(73) Patentinhaber: Spheros GmbH, 82205 Gilching (DE)
(72) Erfinder: Rindsfüßer, Martin, 82166 Gräfelfing (DE); Buck, Ralf, 85110 Kipfenberg (DE)
(74) Vertreter: Strasser, Wolfgang

(56) Entgegenhaltungen:
- EP-A1- 0 388 525
- EP-B1- 1 673 847
- DE-A1- 4 038 872
- DE-A1-102004 043 845
- DE-A1-102006 047 369
- DE-B4- 10 014 118
- US-A- 1 744 090
- US-A- 6 005 481

## Beschreibung

Die Erfindung betrifft eine Vorrichtung zur schwingungsdämpfenden Lagerung eines Klimaanlagen-Nebenaggregats gemäß dem Oberbegriff von Anspruch 1.

Ein besonders wichtiges Einsatzgebiet für eine erfindungsgemäße Vorrichtung ist insbesondere die Lagerung von Klimaanlagen-Nebenaggregaten, wie z.B. von Verdichtern auf dem Dach eines mit einer solchen Klimaanlage ausgestatteten Fahrzeugs.

Zur schwingungsentkoppelten Lagerung von Maschinen werden häufig Dämpferelemente verwendet, die zwei aus Metall bestehende Komponenten umfassen, von denen die eine fest mit dem Träger, beispielsweise einem Fahrzeugdach oder -rahmen, und die andere mit dem Gehäuse der zu lagernden Maschine, beispielsweise des Verdichters, fest verschraubt wird. Die beiden Komponenten sind miteinander durch einen Körper aus einem elastischen Material verbunden, der aus einem Elastomer oder einem Metallgeflecht bestehen kann.

Diese bekannten Dämpferelemente zeigen stark richtungsabhängige Eigenschaften und können im Allgemeinen in axialer Richtung stärker belastet werden als in radialer Richtung (Scherung).

Zu lagernde Bauteile, welche aktiv in Richtung aller drei Raumachsen Beschleunigungen ausführen und passiv beschleunigt werden können, wie z.B. ein Kältemittelverdichter einer Fahrzeug-Klimaanlage, sind an mehreren Stellen in jeder der drei Raumrichtungen abzufangen. Verwendet man hierzu die eben beschriebenen bekannten Dämpferelemente, so erfordert dies einen entsprechend großen Bauraumbedarf.

Nachteilig ist weiterhin, dass die Entkopplungs- und Dämpfungseigenschaften der bekannten Dämpferelemente stark richtungsabhängig sind und dass sich durch die relativ kleinen Auflageflächen bei schweren Aggregaten hohe Drücke auf das schwingungsdämpfende Element einstellen. Die Elastizität des elastomeren Körpers muss dementsprechend "hart" ausgelegt werden, um den statischen und dynamischen Belastungen während der gesamten Lebensdauer standhalten zu können. Dies beeinträchtigt die Akustik im Fahrgastraum, da Vibrationen in Abhängigkeit von der Frequenz teilweise an den Fahrzeugrahmen weitergeleitet werden. Weicher ausgelegte Dämpfungselemente können zwar besser Schwingungen entkoppeln, weisen aber bei den im geschilderten Verwendungsfall auftretenden Belastungen eine zu kurze Lebensdauer auf.

Aus der DE 100 14 118 B4 und der DE 10 2004 043 845 A1 sind Anordnungen zur schalldämpfenden Lagerungen von Aggregaten, nämlich einer Brennstoffdosierpumpe bzw. eines kleinen Elektromotors bekannt. Eine Schalldämpfung bzw. Schalldämmung ist nicht ohne weiters mit einer Schwhgungsdämpfung vergleichbar. Auch sind die zu absorbierenden Schwingungs- und Schallamplituden und Energien solcher Kleingeräte mit denen eines Klimaanlagen-Nebenaggregats nicht vergleichbar.

Die EP 0 388 525 zeigt eine Vorrichtung zur Kühlung und Geräuschdämpfung einer Druckluftkompressoreinheit, bei der zwar ähnliche Probleme wie beim Erfindungsgegenstand auftreten könne, doch wird hier ein völlig anderer Lösungsweg eingeschlagen.

In der DE 10 2006 047 369 A1 wird der konstruktive Aufbau eines Aufdach-Klimaanlagengohäuses beschrieben, das zur Gewichtsersparnis aus geschäumten EPP besteht. Eins spezielle, schwingungsdämpfende Lagerung eines Klimaanlagen-Nebenaggregats ist dieser Druckschrift nicht entnehmbar.

Somit liegt der Erfindung die Aufgabe zugrunde, eine Vorrichtung zur schwingungsdämpfenden Lagerung eines Aggregats der eingangs genannten Art zu schaffen, die einen kleinen Einbauraum benötigt, für eine gute Schwingungsentkoppelung zwischen dem zu lagernden Aggregat und dem Träger (Fahrzeugdach und/oder Fahrzeugrahmen) sorgt und überdies hohen Anforderungen an die Länge der Lebensdauer genügt.

Zur Lösung dieser Aufgabe sieht die Erfindung die im Anspruch 1 zusammengefassten Merkmale vor.

Gemäß der Erfindung wird das zu lagernde Aggregat in einen Lagerkörper aus Formschaumstoff eingelegt, der so ausgestaltet ist, dass er das Aggregat an seinen Längsseiten und seiner Unterseite teilweise umschließt und in einer vordefinierten Position fixiert.

Der Lagerkörper selbst ist in eine Halterung eingesetzt, die von einer aus Metall oder einem Verbundwerkstoff bestehenden Wanne gebildet wird und auf dem Fahrzeugdach aufliegend fest mit dem Fahrzeugrahmen verschraubt oder auf das Fahrzeugdach selbst aufgeklebt werden kann. Die Wanne ist so ausgestaltet, dass sie den Lagerkörper auf seiner Außenseite vollständig umschließt und ihn in einer vordefinierten Position fixiert. Dabei sind die Dimensionen der Wanne so gewählt, dass es an keiner Stelle zu einer unmittelbaren Berührung zwischen ihr und dem in den Lagerkörper eingesetzten Aggregat kommen kann.

An den Stirnseiten wird das zu lagernde Aggregat durch kleinere Pufferkörper aus einem elastomeren Material gegen die Wanne abgestützt bzw. positioniert.

Senkrecht nach oben ist das Aggregat durch einen Haltebügel gesichert, der an der Wanne an zwei sich gegenüberliegenden Punkten so fixiert ist, dass er mit einer vordefinierten Anpresskraft auf einen weiteren Schaumstoffblock drückt, der zwischen dem Haltebügel und dem Gehäuse des Aggregates angeordnet ist.

Die Auflageflächen der stirnseitig positionierten Pufferkörper, des zwischen dem Haltebügel und der Oberseite des Aggregats befindlichen Schaumstoffblocks und des Lagerkörpers selbst, sind so ausgelegt, dass die durch statische und dynamische Belastungen auftretenden Kräfte die maximal zulässigen Werte für das Schubmodul des ausgewählten schwingungsdämpfenden Materials nicht überschreiten.

Unter Berücksichtigung von Eigengewicht des zu lagernden Aggregats und der zu erwartenden Beschleunigungen, die sowohl durch den Betrieb des Aggregates als auch durch die Fortbewegung des Fahrzeuges verursacht werden, sind die Materialeigenschaften des schwingungsdämpfenden Materials so gewählt, dass die Anforderungen an die Lebensdauer, Elastizität und Dämpfung erfüllt werden.

Diese und andere vorteilhafte Ausgestaltungen und Weiterbildungen einer erfindungsgemäßen Lagervorrichtung sind in den Unteransprüchen niedergelegt.

Die Erfindung wird im Folgenden anhand eines Ausführungsbeispiels unter Bezugnahme auf die Zeichnung beschrieben; in dieser zeigen:
- Fig. 1: eine perspektivische, auseinander gezogene Darstellung der wesentlichsten Komponenten einer erfindungsgemäßen Vorrichtung einschließlich des zu lagernden Aggregats,
- Fig. 2: eine vergrößerte Darstellung eines Lagerkörpers aus schwingungsdämpfendem Material zur Aufnahme des zu lagernden Aggregats aus Fig. 1,
- Fig. 3: eine perspektivische Ansicht einer trogförmigen Wanne zur Aufnahme des Lagerkörpers aus Fig. 2,
- Fig. 4: eine perspektivische Darstellung der trogförmigen Wanne und des Lagerkörpers aus den Figuren 2 und 3 im zusammengebauten Zustand, und
- Fig. 5: eine perspektivische Ansicht der trogförmigen Wanne aus Fig. 1 mit geschlossenem Deckel.

In den Figuren sind gleiche Teile mit den gleichen Bezugszeichen bezeichnet. Die Ausdrücke "oben" und "unten" beziehen sich im vorliegenden Text auf die Anordnung im montierten Zustand auf einem Träger, insbesondere auf der Oberseite eines Fahrzeugdaches.

Bei dem in den Figuren dargestellten Ausführungsbeispiel ist das zu lagernde Aggregat 1 der Verdichter einer Fahrzeugklimaanlage, der schwingungsgedämpft auf dem den Träger der erfindungsgemäßen Lagervorrichtung bildenden, in den Figuren nicht dargestellten Fahrzeugdach gelagert werden soll.

Zu diesem Zweck umfasst die erfindungsgemäße Lagervorrichtung eine mit dem Fahrzeugrahmen und/oder dem Fahrzeugdach fest zu verbindende trogförmige Wanne 3 aus einem Verbundwerkstoff oder Metall, beispielsweise Aluminium, welche im Wesentlichen die Form eines länglichen Quaders mit einer Bodenplatte 5, zwei hierzu senkrechten Längswänden 6, 7 und zwei sowohl zu den Längswänden 6, 7 als auch der Bodenplatte 5 senkrechten Querwänden 8, 9 aufweist, nach oben offen ist und durch einen haubenförmigen Deckel 10 verschlossen werden kann, wie im Folgenden noch genauer erläutert wird.

Auf der Oberseite der Bodenplatte 5 sind zwei parallel zu den Querwänden 8, 9 verlaufende Stege 11, 12 ausgebildet, die in Längsrichtung der Wanne 3 einen solchen Abstand voneinander aufweisen, dass zwischen sie ein Lagerkörper 15 aus einem schwingungsdämpfenden Material, vorzugsweise einem Formschaumstoff eingesetzt werden kann. Die axiale Länge des Lagerkörpers 15 ist gleich dem Abstand der beiden Stege 11, 12, so dass er durch diese im eingesetzten Zustand gegen ein Verrutschen in Längsrichtung der Wanne 3 gesichert ist.

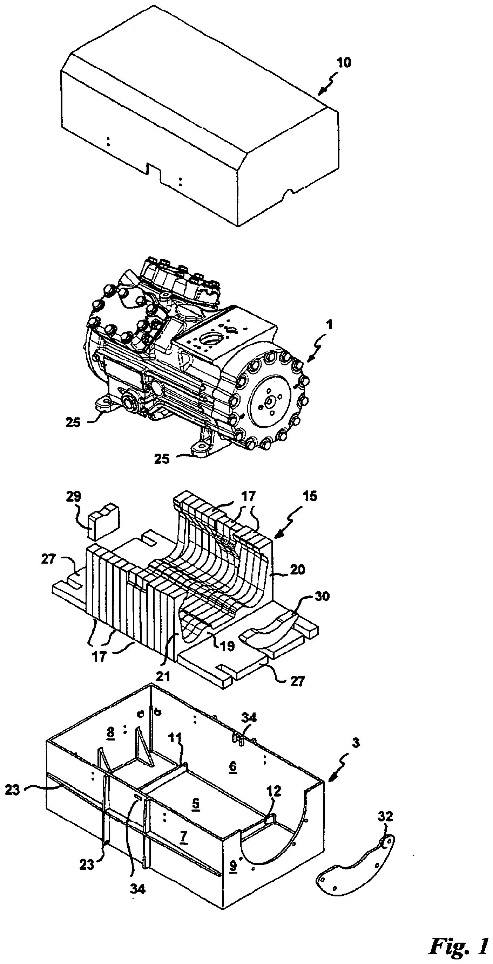

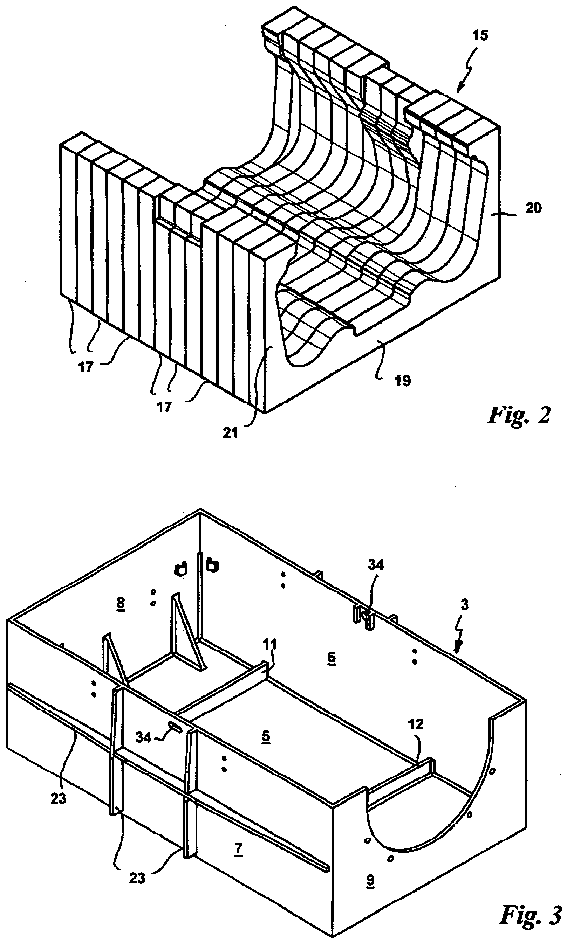

Wie man den Figuren 1 und 2 entnimmt, ist bei dem gezeigten Ausführungsbeispiel der Lagerkörper 15 aus einer Vielzahl von scheibenförmigen Schaumstoffelementen 17 zusammengesetzt, die jeweils aus einer entsprechend dicken Schaumstoffplatte herausgeschnitten sein können. Jedes dieser Schaumstoffelemente 17 ist im Wesentlichen in Form eines C ausgebildet, dessen Öffnung in montierten Zustand nach oben weist, d.h. eine sich horizontal und quer zur Längsachse des Lagerkörpers 17 erstreckende Basis 19 und zwei von deren Enden senkrecht nach oben vorstehende Schenkel 20, 21 besitzt.

Auf seiner Außenseite weist jedes der Schaumstoffelemente 17 eine Rechtecksform auf, die so bemessen ist, dass die Außenseiten der nach oben ragenden Schenkel 20, 21 im zusammengebauten Zustand eng an den Innenseiten der Längswände 6, 7 der Wanne 3 anliegen. Mit ihren Flachseiten liegen die Schaumstoffelemente 17 unmittelbar aneinander an. Sie können entweder durch Kleben oder Verschweißen miteinander verbunden oder einzeln in die Wanne 3 zwischen die quer verlaufenden Stege 11, 12 eingesetzt sein.

Alternativ kann der Lagerkörper 15 auch einstückig mit einer entsprechenden Außenkontur aus einem Schaumstoffblock ausgeschnitten oder durch ein Gussverfahren hergestellt sein.

Wesentlich ist in jedem Fall, dass der vom Lagerkörper 15 umschlossene, rinnenförmige Aufnahmehohlraum eine Kontur besitzt, die an die Außenkontur des Gehäuses des aufzunehmenden Teils des Aggregates 1 angepasst ist. Dabei sind die Abmessungen des Aufnahmehohlraums des Lagerkörpers 15 etwas kleiner als die Außenabmessungen des aufzunehmenden Gehäuseteils des Aggregates 1, so dass der Lagerkörper 15 bzw. die ihn bildenden Schaumstoffelemente 17 im zusammengebauten Zustand zwischen dem Gehäuse des Aggregates 1 und den Längswänden 6, 7 der Wanne 3 eine leichte Kompression erfahren. Um die entsprechenden Kräfte aufnehmen zu können, sind die Längswände 6, 7 auf ihren Außenseiten durch horizontale und vertikale Rippen 23 verstärkt, von denen in den Figuren wegen der perspektivischen Darstellungen immer nur die auf der Außenseite der Längswand 7 vorhandenen Rippen 23 zu sehen sind. Es versteht sich, dass die gegenüberliegende Längswand 6 auf ihrer nicht sichtbaren Außenseite entsprechende Rippen aufweist.

Wie man der Figur 1 entnimmt, besitzt das Gehäuse des Aggregates 1 auf seiner Unterseite zwei sich quer zu seiner Axialrichtung erstreckende Lagerblöcke 25, deren axialer Abstand größer als die axiale Länge des Lagerkörpers 15 ist, so dass sie im zusammengebauten Zustand über den Lagerkörper 15 hinaus vorstehen; sie bleiben bei der erfindungsgemäßen Anordnung ohne weitere Funktion.

Zwischen der Querwand 8 der Wanne 3 und dem ihr am nächsten liegenden Steg 11 und zwischen dem Steg 12 und der Querwand 9 der Wanne 3 ist jeweils eine der akustischen Schalldämmung dienende, auf der Bodenplatte 5 aufliegende Platte 27, 27 aus schwingungsdämpfendem Material vorgesehen.

Die Dimensionen der der Wanne 3 sind auf die des Aggregates 1 so abgestimmt, dass es zu keiner direkten Berührung zwischen der Wanne 3 und dem Aggregat 1 kommt. Insbesondere ist die axiale Länge der Wanne 3 auf die des Aggregats 1 so abgestimmt, dass zwischen den Querwänden 8, 9 der Wanne 3 und den ihnen zugewandten Stirnseiten des Gehäuses des Aggregates 1 jeweils ein Freiraum verbleibt, der zur Aufnahme eines Pufferkörpers 29 bzw. 30 dient. Im zusammengebauten Zustand stehen diese beiden Pufferkörper 29, 30 unter leichter Kompression und stützen den zentralen Längsbereich des Aggregates 1 an den Querwänden 8, 9 der Wanne 3 ab.

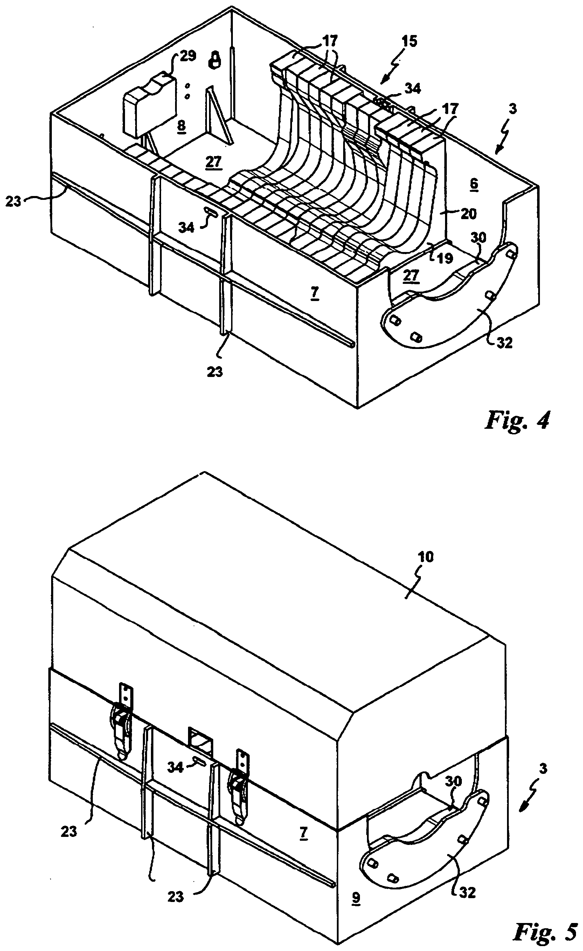

Wie man der Figur 4 entnimmt, ist der Pufferkörper 29 von vornherein an der hinteren Querwand 8 beispielsweise durch Kleben befestigt. Um das Einsetzen des Aggregates 1 in die Wanne 3 mit dem darin befindlichen Lagerkörper 15 zu vereinfachen, besitzt die vordere Querwand 9 der Wanne 3 eine halbkreisförmige Ausnehmung, die nach oben hin offen ist und im zusammengebauten Zustand durch eine in etwa nierenförmige Metallplatte 32 teilweise verschlossen wird, die mit Hilfe von Schrauben von außen her an der Querwand 9 befestigt werden kann. Den Figuren 4 und 5 ist zu entnehmen, dass diese nierenförmige Metallplatte 32 auf ihrer Innenseite den erwähnten zweiten Pufferkörper 30 aus schwingungsdämpfendem Material trägt.

Zwar ist in den Figuren 4 und 5 die Metallplatte 32 mit der Querwand 9 verschraubt dargestellt, ohne dass das Aggregat in die Wanne 3 und den in ihr befindlichen Lagerkörper 15 eingesetzt ist. Tatsächlich werden aber die Metallplatte 32 und der an ihrer Innenseite befestigte Pufferkörper 30 erst mit der Querwand 9 verschraubt, nachdem das Aggregat 1 im Lagerkörper 15 positioniert worden ist. Dabei sind der Längsabstand der Querwände 8, 9 und die Dicke der Pufferkörper 29, 30 so auf die axiale Länge des Gehäuses des Aggregates 1 abgestimmt, dass die Pufferkörper 29, 30 beim Verschrauben der Metallplatte 32 an der Außenseite der Querwand 9 eine leichte Kompression erfahren, um das Aggregat 1 zusätzlich zu stabilisieren.

Unter einer "leichten Kompression" wird im vorliegenden Zusammenhang eine teilweise Kompression der betreffenden Körper aus schwingungsdämpfendem Material verstanden, die stark genug ist, um eine Stabilisierung des Aggregates 1 zu erreichen, aber nicht so stark, dass die schwingungsdämpfende Wirkung der betreffenden Körper verloren gehen würde.

Wenn das Aggregat 1 in die Wanne 3 und den in ihr befindlichen Lagerkörper 15 von oben her eingesetzt ist, kann es noch zusätzlich durch einen in Querrichtung über seine Oberseite verlaufenden, nicht dargestellten Haltebügel gesichert werden, der beispielsweise in Schlitze 34 eingehängt werden kann, die in der Mitte der Längswände 6, 7 der Wanne 3 in der Nähe von deren Oberkante vorgesehen sind. Zwischen der Oberseite des Aggregates 1 und dem Haltebügel befindet sich ein weiterer Pufferkörper (nicht dargestellt) aus einem schwingungsdämpfenden Material.

Statt eines Haltebügels kann auch ein Spannband oder dergl. zum Festlegen und Sichern des Aggregates 1 gegenüber der fest auf dm Fahrzeugdach montierten Wanne 3 verwendet werden.

Alternativ ist es auch möglich, den Haltebügel oder das Spannband mit den Längswänden 6, 7 der Wanne 3 zu verschrauben.

Der haubenförmige Deckel 10, der mit seinen Unterkanten exakt auf den Oberkanten der Längs- und Seitenwände der Wanne 3 aufsitzt, hat keine zusätzliche Lagerfunktion sondern dient der Abdeckung und der akustischen Schallisolierung nach außen. Er kann, wie in Figur 5 gezeigt, beispielsweise durch Kipphebelverschlüsse befestigt werden, wie sie auch von Werkzeugkästen und dergleichen bekannt sind.

## Patentansprüche

1. Vorrichtung zur schwingungsdämpfenden Lagerung eines Klimaanlagen-Nebenaggregates (1) auf einem Träger, **dadurch gekennzeichnet, dass** sie folgendes umfasst:
einen länglichen Lagerkörper (15) aus einem schwingungsdämpfenden Material, der einen an den beiden axialen Enden und im montieren Zustand oben offenen Aufnahmehohlraum aufweist, in den das zu lagernde Klimaanlagen-Nebenaggregat (1) von oben her eingesetzt werden kann, so dass es der Lagerkörper (15) zumindest von unten und auf den einander gegenüberliegenden Längsseiten umgreift, und
eine auf dem Träger montierbare, oben offene trogförmige Wanne (3) aus einem starren Material, in welche der Lagerkörper (15) von oben her eingesetzt und gegen Verrutschen gesichert ist, und deren Abmessungen so gewählt sind, dass das zu lagernde Klimaanlagen-Nebenaggregat (1) mit ihr nicht in unmittelbare Berührung kommt.

2. Vorrichtung nach Anspruch 1, **dadurch gekennzeichnet, dass** die Innenform des Aufnahmehohlraums des Lagerkörpers (15) an die Außenform des in ihm aufgenommenen Teils des Klimaanlagen-Nebenaggregates (1) angepasst ist.

3. Vorrichtung nach Anspruch 1 oder 2, **dadurch gekennzeichnet, dass** die Länge des Lagerkörpers (15) kleiner als die Länge des in ihm aufgenommenen Teils des Klimaanlagen-Nebenaggregates (1) ist.

4. Vorrichtung nach Anspruch 3, **dadurch gekennzeichnet, dass** die Länge der Wanne (3) größer als die Länge des Lagerkörpers (15) ist und dass zwischen den Querwänden (8, 9) der Wanne (3) und aus dem Aufnahmehohlraum des Lagerkörpers (15) vorstehenden Teilen des Klimaanlagen-Nebenaggregates (1) Pufferkörper (29, 30) aus einem schwingungsdämpfenden Material angeordnet sind, die das Klimaanlagen-Nebenaggregat (1) gegen ein Verrutschen in Längsrichtung abstützen.

5. Vorrichtung nach einem der vorhergehenden Ansprüche, **dadurch gekennzeichnet, dass** an den Längswänden (6, 7) der trogförmigen Wanne ein das Klimaanlagen-Nebenaggregat (1) von oben her übergreifender Haltebügel montiert ist, der zum Einsetzen des Klimaanlagen-Nebenaggregates (1) in den Lagerkörper (15) geöffnet und zur Fixierung des eingesetzten Klimaanlagen-Nebenaggregates (1) geschlossen werden kann.

6. Vorrichtung nach Anspruch 5, **dadurch gekennzeichnet, dass** zwischen dem Haltebügel und der Oberseite des Klimaanlagen-Nebenaggregates (1) ein weiterer Pufferkörper aus einem schwingungsdämpfenden Material vorgesehen ist, der im geschlossenen Zustand der Bügelanordnung zwischen dieser und der Oberseite des Klimaanlagen-Nebenaggregates (1) leicht komprimiert ist und das Klimaanlagen-Nebenaggregat (1) in dem Lagerkörper und der trogförmigen Wanne festklemmt.

7. Vorrichtung nach einem der vorhergehenden Ansprüche, **dadurch gekennzeichnet, dass** die Wanne (3) aus Metall besteht.

8. Vorrichtung nach einem der Ansprüche 1 bis 3, **dadurch gekennzeichnet, dass** die Wanne (3) aus einem Verbundwerkstoff besteht.

9. Vorrichtung nach einem der vorhergehenden Ansprüche, **dadurch gekennzeichnet, dass** der Lagerkörper (15) aus mehreren, sich quer zu seiner Längsrichtung erstreckenden, scheibenförmigen Schaumstoffelementen (17) zusammengesetzt ist.

10. Vorrichtung nach einem der vorhergehenden Ansprüche, **dadurch gekennzeichnet, dass** das Klimaanlagen-Nebenaggregat (1) der Verdichter einer Aufdachklimaanlage eines Fahrzeuges ist, und dass das Fahrzeugdach den Träger bildet.

## Claims

1. Apparatus for vibration-damping mounting of an air conditioning installation ancillary unit (1) on a carrier, **characterised in that** it includes the following:
an elongate mounting body (15) comprising a vibration-damping material, which has a receiving cavity which is open at the two axial ends and open upwardly in the mounted condition and into which the air conditioning installation ancillary unit (1) can be inserted from above so that the mounting body (15) embraces it at least from below and on the mutually opposite longitudinal sides, and
an upwardly trough-shaped pan (3) which can be mounted on the carrier and which comprises a rigid material and into which the mounting body (15) can be fitted from above and secured against slipping and the dimensions of which are so selected that the air conditioning installation ancillary unit (1) to be mounted does not come into direct contact therewith.

2. Apparatus according to claim 1 **characterised in that** the inside shape of the receiving cavity of the mounting body (15) is matched to the outside shape of the part accommodated therein of the air conditioning installation ancillary unit (1).

3. Apparatus according to claim 1 or claim 2 **characterised in that** the length of the mounting body (15) is less than the length of the part accommodated therein of the air conditioning installation ancillary unit (1).

4. Apparatus according to claim 3 **characterised in that** the length of the pan (3) is greater than the length of the mounting body (15) and arranged between the transverse walls (8, 9) of the pan (3) and parts of the air conditioning installation ancillary unit (1), that project from the receiving cavity of the mounting body (15), are buffer bodies (29, 30) which comprise a vibration-damping material and which support the air conditioning installation ancillary unit (1) against slipping in the longitudinal direction.

5. Apparatus according to one of the preceding claims **characterised in that** mounted to the longitudinal walls (6, 7) of the trough-shaped pan is a retaining bracket which engages over the air conditioning installation ancillary unit (1) from above and which can be opened for insertion of the air conditioning installation ancillary unit (1) into the mounting body (15) and closed for fixing the inserted air conditioning installation ancillary unit (1).

6. Apparatus according to claim 5 **characterised in that** provided between the retaining bracket and the top side of the air conditioning installation ancillary unit (1) is a further buffer body which comprises a vibration-damping material and which in the closed condition of the bracket arrangement is slightly compressed between same and the top side of the air conditioning installation ancillary unit (1) and clamps the air conditioning installation ancillary unit (1) firmly in the mounting body and the trough-shaped pan.

7. Apparatus according to one of the preceding claims **characterised in that** the pan (3) comprises metal.

8. Apparatus according to one of claims 1 to 3 **characterised in that** the pan (3) comprises a composite material.

9. Apparatus according to one of the preceding claims **characterised in that** the mounting body (15) is assembled from a plurality of plate-shaped foam elements (17) extending transversely relative to its longitudinal direction.

10. Apparatus according to one of the preceding claims **characterised in that** the air conditioning installation ancillary unit (1) is the compressor of
a roof-mounted air conditioning installation of a vehicle and that the vehicle roof forms the carrier.

## Revendications

1. Dispositif permettant de porter un groupe auxiliaire de système de climatisation (1) sur un support de façon à amortir les vibrations, **caractérisé en ce qu'**il comprend les éléments suivants :
un corps de support (15) allongé fait d'un matériau amortissant les vibrations, qui comprend une cavité de réception ouverte par le dessus aux deux extrémités axiales et dans l'état monté, dans laquelle le groupe auxiliaire de système de climatisation (1) à porter peut être inséré par le haut, de sorte que le corps de support (15) l'enserre au moins par le bas et sur les côtés longitudinaux opposés les uns aux autres, et
une cuve (3) en forme d'auge ouverte par le haut et pouvant être montée sur le support, faite d'un matériau rigide, dans laquelle le corps de support (15) est inséré par le haut et est empêché de glisser, et dont les dimensions sont sélectionnées de telle manière que le groupe auxiliaire de système de climatisation (1) à porter ne vient pas en contact direct avec elle.

2. Dispositif selon la revendication 1, **caractérisé en ce que** la forme intérieure de la cavité de réception du corps de support (15) est adaptée à la forme extérieure de la partie du groupe auxiliaire de système de climatisation (1) reçue dans cette dernière.

3. Dispositif selon la revendication 1 ou 2, **caractérisé en ce que** la longueur du corps de support (15) est inférieure à la longueur de la partie du groupe auxiliaire de système de climatisation (1) reçue dans ce dernier.

4. Dispositif selon la revendication 3, **caractérisé en ce que** la longueur de la cuve (3) est supérieure à la longueur du corps de support (15) et **en ce que** des parties du groupe auxiliaire de système de climatisation (1) faisant saillie entre les parois transversales (8, 9) de la cuve (3) et de la cavité de réception du corps de support (15) sont des corps amortisseurs (29, 30) qui sont faits d'un matériau amortissant les vibrations et qui soutiennent le groupe auxiliaire de système de climatisation (1) pour l'empêcher de glisser dans la direction longitudinale.

5. Dispositif selon l'une quelconque des revendications précédentes, **caractérisé en ce qu'**un étrier de retenue enserrant par le haut le groupe auxiliaire de système de climatisation (1) est monté sur les parois longitudinales (6, 7) de la cuve en forme d'auge et peut être ouvert pour insérer le groupe auxiliaire de système de climatisation (1) dans le corps de support (15) et peut être fermé pour fixer le groupe auxiliaire de système de climatisation (1) inséré.

6. Dispositif selon la revendication 5, **caractérisé en ce qu'**un autre corps amortisseur, qui est fait d'un matériau amortissant les vibrations et qui, une fois l'ensemble étrier fermé, est légèrement comprimé entre ledit ensemble et la face supérieure du groupe auxiliaire de système de climatisation (1) et bloque le groupe auxiliaire de système de climatisation (1) dans le corps de support et la cuve en forme d'auge, est prévu entre l'étrier de retenue et la face supérieure du groupe auxiliaire de système de climatisation (1).

7. Dispositif selon l'une quelconque des revendications précédentes, **caractérisé en ce que** la cuve (3) est constituée de métal.

8. Dispositif selon l'une quelconque des revendications 1 à 3, **caractérisé en ce que** la cuve (3) est constituée d'un matériau composite.

9. Dispositif selon l'une quelconque des revendications précédentes, **caractérisé en ce que** le corps de support (15) est composé de plusieurs éléments en mousse (17) en forme de disque s'étendant transversalement à la direction longitudinale dudit corps.

10. Dispositif selon l'une quelconque des revendications précédentes, **caractérisé en ce que** le groupe auxiliaire de système de climatisation (1) est le compresseur d'un système de climatisation monté sur le toit d'un véhicule, et **en ce que** le toit du véhicule forme le support.
